# EUROPÄISCHE PATENTANMELDUNG

(11) **EP 4 667 759 A1**
(43) Veröffentlichungstag der Anmeldung: **24.12.2025**
(21) Anmeldenummer: 24182490.3
(22) Anmeldetag: 17.06.2024
(51) Int. Cl.: F16B 43/00, F16B 37/14

(54) **DICHTELEMENT UND VERFAHREN ZUM BILDEN DES DICHTELEMENTES**

(71) Anmelder: Fischer & Kaufmann GmbH & Co. KG, 57413 Finnentrop (DE)
(72) Erfinder: LADWIG, Sven, 58566 Kierspe (DE)
(74) Vertreter: Wunderlich & Heim Patentanwälte PartG mbB

(57) **Zusammenfassung**

Die Erfindung betrifft ein Dichtelement mit einem ringförmigen Grundkörper (12) aus einem Blechmaterial, einer im Grundkörper (12) angeordneten Mittenöffnung (14), welche zum Aufnehmen und Halten eines Bolzens (30), insbesondere eines Schraubbolzens, ausgebildet ist, und mindestens einem Dichtring, welcher an dem Grundkörper angeordnet ist. Nach der Erfindung ist vorgesehen, dass ein erster Dichtring (21) an einer ersten Seite des Grundkörpers (12) angeordnet ist, dass ein zweiter Dichtring (22) an dem Grundkörper (12) an einer zweiten Seite angeordnet ist, welche von der ersten Seite abgewandt ist, und dass der erste Dichtring (21) und der zweite Dichtring (22) aus einem Kunststoffmaterial durch Spritzgieβen auf dem Grundkörper (12) ausgebildet und daran fest angebracht sind.

## Beschreibung

Die Erfindung betrifft ein Dichtelement mit einem ringförmigen Grundkörper aus einem Blechmaterial, einer im Grundkörper angeordneten Mittenöffnung, welche zum Aufnehmen und Halten eines Bolzens, insbesondere eines Schraubbolzens, ausgebildet ist, und mindestens einem Dichtring, welcher an dem Grundkörper angeordnet ist, gemäß dem Oberbegriff des Anspruchs 1.

Die Erfindung betrifft weiter ein Verfahren zum Bilden eines solchen Dichtelementes, wobei aus einem Blechmaterial ein ringförmiger Grundkörper mit einer Mittenöffnung gebildet wird, welche zum Aufnehmen und Halten eines Bolzens, insbesondere eines Schraubbolzens, ausgebildet ist, und mindestens ein Dichtring an dem Grundkörper angeordnet wird, gemäß dem Anspruch 13.

Dichtelemente mit einem ringförmigen Grundkörper, etwa einer Dichtscheibe, aus einem Blechmaterial sind seit langem bekannt und werden beispielsweise in der Befestigungstechnik zum Abdichten einer Fuge zwischen zwei Bauteilen oder einem Bauteil und einer Befestigungsschraube seit langem eingesetzt. Derartige Dichtelemente weisen neben einem ringförmigen Grundkörper aus Blech, also aus einem dünnen Metallmaterial, mindestens ein ringförmiges Dichtelement aus einem Kunststoffmaterial auf, etwa einen sogenannten O-Ring.

Wird ein solcher Dichtring an dem ringförmigen Grundkörper lediglich aufgelegt, besteht die Gefahr, dass sich der Dichtring beispielsweise beim Schließen einer Schraubverbindung durch ein anliegendes Drehmoment verschiebt. Hierdurch kann die Dichtwirkung beeinträchtigt und/oder das Dichtelement beschädigt werden. Es ist weiterhin bekannt, an ringförmigen Grundkörpern von Dichtelementen einen Dichtring fest anzubringen, etwa diesen kraftschlüssig in eine Aufnahme an dem Grundkörper einzubringen und darin festzulegen oder den Dichtring stoffschlüssig durch Aufkleben festzulegen. Dieser Vorgang des Anbringens ist aufwändig und es besteht weiter die Gefahr des Lösens bei einem Montageprozess.

Schließlich ist es bekannt, zur Dichtung an einem ringförmigen Grundkörper ein flüssiges Dichtmittel einzusetzen. Allerdings ist die Dauerfestigkeit über einen längeren Zeitraum, insbesondere von mehreren Jahren, bei flüssigen Dichtmedien problematisch. Zudem ist ein zuverlässiges Aufbringen aufwändig, fehleranfällig und kann in automatisierten Montageprozessen nur relativ schwer integriert werden.

Der Erfindung liegt die **Aufgabe** zugrunde, ein Dichtelement und ein Verfahren zum Herstellen eines solchen Dichtelementes anzugeben, welches eine besonders zuverlässige und effiziente Abdichtung ermöglicht.

Die Aufgabe wird zum einen durch ein Dichtelement mit den Merkmalen des Anspruchs 1 und zum anderen durch ein Verfahren zum Bilden eines solchen Dichtelementes nach dem Anspruch 13 gelöst. Bevorzugte Ausführungsformen der Erfindung sind in den abhängigen Ansprüchen angegeben.

Bei dem erfindungsgemäßen Dichtelement ist vorgesehen, dass ein erster Dichtring an einer ersten Seite des Grundkörpers angeordnet ist, dass ein zweiter Dichtring an dem Grundkörper an einer zweiten Seite angeordnet ist, welche von der ersten Seite abgewandt ist, und dass der erste Dichtring und der zweite Dichtring aus einem Kunststoffmaterial durch Spritzgießen auf den Grundkörper ausgebildet und daran fest angebracht sind.

Ein erster Aspekt der Erfindung liegt darin, an einem ringförmigen Grundkörper des Dichtelementes an den beiden gegenüberliegenden Seite jeweils einen Dichtring anzuordnen. Dabei werden vorzugsweise die Dichtringe durch Spritzgießen unmittelbar an dem Grundkörper aus dem Blechmaterial angegossen. Zur Herstellung der Dichtringe wird ein geeignetes Material verwendet, insbesondere ein Kunststoffmaterial, insbesondere ein thermoplastisches Kunststoffmaterial. Die aufgeschmolzene Kunststoffmasse wird vorzugsweise in einer Gussform, in welcher der Grundkörper aus dem Blechmaterial eingelegt ist, in einem aufgeschmolzenen Zustand angegossen, wobei das Kunststoffmaterial zu den beiden Dichtringen an dem Grundkörper aushärtet und unmittelbar stoffschlüssig daran festgelegt wird. Hierdurch kann eine besonders innige und stabile Verbindung zwischen dem aufgeschmolzenen Dichtring und dem Grundkörper erzielt werden.

Auf diese Weise können Dichtelemente insbesondere für eine Massenfertigung effizient hergestellt werden, wobei eine zuverlässige und sichere Anordnung von zumindest zwei Dichtringen an den beiden Seiten des Grundkörpers aus einem Blech sichergestellt ist. Derartig gebildete Dichtelemente können sehr wirtschaftlich insbesondere in teil- oder vollautomatisierten Montageprozessen zum Einsatz kommen.

Eine bevorzugte Ausführungsform der Erfindung besteht darin, dass an der Mittenöffnung eine Befestigungseinrichtung zum kraftschlüssigen und/oder formschlüssigen Verbinden mit einem darin aufgenommenen Bolzen ausgebildet ist. Ein Bolzen kann insbesondere in einem nachfolgenden Fügevorgang in die Mittenöffnung eingebracht werden. Der Bolzen kann etwa ein Fügebolzen zum Einpressen oder insbesondere ein Schraubbolzen mit einem oder mehreren Schraubgewindeabschnitten sein. Es wird so eine Anordnung aus dem Dichtelement mit einem daran festgelegten Bolzen gebildet. Eine Festlegung des Bolzens an einem Dichtelement ermöglicht eine besonders effiziente Handhabung, insbesondere bei teil- oder vollautomatisierten Montageprozessen.

Nach einer weiteren Ausführungsvariante der Erfindung ist es bevorzugt, dass die Befestigungseinrichtung durch eine oder mehrere radial nach innen vorspringende Blechnasen in dem Grundkörper gebildet sind. Diese Blechnasen können insbesondere bei einem vorausgegangenen Stanzprozess zum Bilden des Grundkörpers aus dem Blechmaterial hergestellt sein. Unter Berücksichtigung der Dicke des Blechmaterials, welche etwa zwischen 0,1 mm bis 3 mm betragen kann, können die einzelnen radial nach innen vorspringenden Blechnasen oder Blechvorsprünge derart gestaltet sein, dass sich diese bei einem Einbringen eines Bolzens elastisch aufbiegen und in der aufgebogenen Position eine kraftschlüssige und/oder formschlüssige Fixierung des Bolzens an dem Grundkörper in einer gewünschten Endposition sicherstellen. So kann insbesondere ein kraftschlüssiges Festlegen des Bolzens an dem Grundkörper erreicht werden. Sofern an dem Bolzen an einer gewünschten Position eine ringförmige Aufnahmenut oder ein sonstiger Anschlagbereich für die Blechnasen ausgebildet ist, kann alternativ oder zusätzlich ein formschlüssiges Festlegen des Bolzens durch die Befestigungseinrichtung an dem Grundkörper erzielt werden.

Nach einer weiteren Ausgestaltung der Erfindung ist es vorteilhaft, dass der Grundkörper topfförmig mit einem Bodenbereich an der ersten Seite und einem radial gerichteten Randsaum an der zweiten Seite ausgebildet ist und dass der erste Dichtring an dem Bodenbereich und der zweite Dichtring an dem Randsaum angeordnet sind. Zwischen dem Bodenbereich und vorzugsweise radial nach außen gerichteten Randsaum erstreckt sich eine trommelförmige Umfangs- oder Topfwand, wobei ein Aufnahmeraum in dem topfförmigen Grundkörper gebildet ist.

Der erste Dichtring kann an der nach außen gerichteten Unterseite des vorzugsweise scheibenförmigen Bodenbereichs und der zweite Dichtring an der nach außen gerichteten Oberseite des vorzugsweise ringförmigen Randsaumes angeordnet sein. Auf diese Weise sind die beiden Dichtringe entsprechend der axialen Erstreckung des topfförmigen Grundkörpers und insbesondere einer sich axial erstreckenden trommelförmigen Umfangs- oder Topfwand axial beabstandet. Weiter kann hiedurch ein innerer Aufnahmeraum des topfförmigen Grundkörpers gebildet werden. Das Dichtelement kann zur Verbindung von zwei Bauteilen eingesetzt werden, wobei das erste Bauteil an dem Bodenbereich mit dem ersten Dichtring und das zweite Bauteil an dem Randsaum mit dem zweiten Dichtring zur Anlage kommt.

Vorzugsweise kann der Aufnahme- oder Innenraum des topfförmig gebildeten Grundkörpers so dimensioniert sein, dass etwa ein Betätigungsabschnitt eines Bolzens, insbesondere eines Schraubbolzens, darin aufgenommen werden kann. So ist es grundsätzlich möglich, einen Schraubbolzen einschließlich des Betätigungsabschnittes an dem Schraubbolzen axial zu beiden Seiten mit ringförmigen Dichtungen gegenüber einem Außenbereich umfassend abzudichten. Der Schraubbolzen kann so zur Verbindung von zwei Bauteilen eingesetzt werden, wobei die Schraublöcher in den Bauteilen durch das Dichtelement mit den zwei Dichtringen in Umfangsrichtung abgedichtet sind.

Eine weitere bevorzugte Ausführungsvariante der Erfindung besteht darin, dass an dem Grundkörper in Bereichen, in welchen die Dichtringe angeordnet sind, eine oder mehrere Öffnungen eingebracht sind, welche beim Spritzgießen mit Kunststoffmaterial für ein formschlüssiges Verbinden zumindest teilweise ausgefüllt sind. Diese Öffnungen können durch geeignete Fertigungsverfahren, wie vorzugsweise gleichzeitig mit dem Stanzen und Umformen des Grundkörpers auf einer Presse oder durch ein zeitlich vom Umformen getrenntes Bohren, in den Grundkörper eingebracht werden. Eine derartige formschlüssige Verbindung erhöht die Festigkeit und Stabilität der gesamten Dichtringanordnung, da das Kunststoffmaterial nicht nur oberflächig/stoffschlüssig an dem Grundkörper haftet, sondern auch mechanisch/durch Formschluss zumindest teilweise in die Öffnungen eingebunden ist. Vorzugsweise durchdringt das aufgeschmolzene Kunststoffmaterial beim Einspritzen die insbesondere als Durchgänge ausgebildeten Öffnungen und gelangt bis zur gegenüberliegenden Seite des Blechs. Hierdurch erhöht sich auch die Verbindungsfläche und damit auch die Festigkeit der Verbindung. So sind die Dichtringe gegen ein Lösen, insbesondere aufgrund eines anliegenden Drehmoments, besonders gut abgesichert. Des Weiteren kann ein Prozessschritt, um die Dichtringe beispielsweise durch ein Klebemittel anzubringen, entfallen, was den Produktionsprozess vereinfacht.

Dabei ist es nach einer weiteren vorteilhaften Ausgestaltung der Erfindung bevorzugt, dass die Dichtringe über mindestens einen Gusssteg verbunden sind, welcher mit dem Kunststoffmaterial der Dichtringe gebildet ist. Hierdurch können die Dichtringe während der Fertigung in einem einzigen Prozessschritt aus dem Kunststoffmaterial mit einem Anguss gegossen werden. Dies vereinfacht den Produktionsprozess und trägt somit zur Erhöhung von Effizienz und Wirtschaftlichkeit bei.

Nach einer Ausführungsvariante der Erfindung ist es besonders wirtschaftlich, dass der Grundkörper durch Stanzen und Umformen, insbesondere Tiefziehen, gebildet ist. Der Grundkörper wird aus einem Ausgangsblech, welches insbesondere eine Blechdicke zwischen 0,1 mm und 3 mm aufweisen kann, mittels einer Presse in einem oder mehreren Stanz- und Umformschritten hergestellt.

Gemäß der Erfindung kann eine Bolzenanordnung geschaffen werden, wobei diese einen mittigen Bolzen und ein daran angebrachtes Dichtelement umfasst, welches gemäß der Erfindung ausgebildet ist. Die Bolzenanordnung weist die zuvor beschriebenen Vorteile auf.

Weiterhin kann die Bolzenanordnung nach einer erfindungsgemäßen Ausgestaltung vorteilhafterweise dadurch ausgestaltet sein, dass der Bolzen als ein Schraubbolzen ausgebildet ist, welcher an einem oder beiden Endbereichen mit einem Schraubgewinde versehen ist. Dieser kann je nach Anwendung aus unterschiedlichen Materialien, insbesondere Stahl, Edelstahl oder einer geeigneten Legierung, gefertigt sein, wobei das Schraubgewinde durch beispielsweise Drehen, Fräsen oder Walzen hergestellt werden kann. Durch dieses Gewinde kann die Bolzenanordnung in einer Vielzahl von Anwendungen und Strukturen zum Ausbilden einer Schraubverbindung eingesetzt werden.

In einer weiteren erfindungsgemäßen Ausführungsform ist die Bolzenanordnung so ausgebildet, dass in einem Mittenbereich des Bolzens ein Anschlagabschnitt ausgebildet ist, welcher einen maximalen Außendurchmesser aufweist, welcher größer als ein Durchmesser der angrenzenden Abschnitte des Bolzens ist, insbesondere größer als ein Durchmesser des mindestens einen Schraubgewindes. Hierdurch kann ein in axialer Richtung zur Bolzenmitte gebildeter Kontaktbereich mit dem zu verbindenden Dichtelement gebildet werden. Der Bolzen kann in einfacher Weise in das Dichtelement eingefügt werden, etwa bis der Anschlagabschnitt an dem Dichtelement zur Anlage kommt. Der Anschlagabschnitt weist eine axiale Länge auf, welche gleich oder kleiner als die axiale Länge der Umfangswand eines topfförmigen Grundkörpers ist. Der Anschlagabschnitt kann so in dem Aufnahmeraum des topfförmigen Grundkörpers zuverlässig aufgenommen und insbesondere dicht umschlossen werden.

Nach einer Weiterbildung der Erfindung ist es besonders bevorzugt, dass der Anschlagabschnitt mit einer polygonalen Außenkontur versehen ist, welche zum Aufbringen eines Drehmomentes mittels eines passenden Schraubwerkzeuges ausgebildet ist. Diese Gestaltung etwa in Form eines Schraubenkopfs, insbesondere als Sechskant, ermöglicht eine Anwendung von Standardwerkzeugen, wie beispielsweise Schraubenschlüsseln oder Stecknüssen. Die polygonale Form sorgt für eine gute und zuverlässige Kraftübertragung, was zu einer effizienten Montage beiträgt.

Gemäß einer weiteren Ausführungsvariante der Erfindung ist es bevorzugt, dass an dem Grundkörper des Dichtelementes zum Bilden einer Befestigungseinrichtung radial nach innen vorspringende Blechnasen ausgebildet sind, welche biegsam sind und sich bis zu einem Innendurchmesser erstrecken, welcher kleiner als die an den Anschlagabschnitt angrenzenden Abschnitte des Bolzens sind, und dass die Blechnasen unter einem elastischen Aufbiegen auf den Bolzen bis zu dem Anschlagabschnitt aufgeschoben sind und das Dichtelement an dem Bolzen festlegen. Dies ermöglicht ein einfaches Fügen des Bolzens durch Einstecken und eine sichere Halterung in der Öffnung des Dichtelementes durch die entstehende Klemmwirkung der elastisch aufgebogenen Blechnasen.

Das erfindungsgemäße Verfahren zum Bilden eines zuvor beschriebenen Dichtelements ist dadurch gekennzeichnet, dass aus einem Blechmaterial ein ringförmiger Grundkörper mit einer Mittenöffnung gebildet wird, welche zum Aufnehmen und Halten eines Bolzens, insbesondere eines Schraubbolzens, ausgebildet ist, und mindestens ein Dichtring an dem Grundkörper angeordnet wird, wobei ein erster Dichtring an einer ersten Seite des Grundkörpers und ein zweiter Dichtring an dem Grundkörper an einer zweiten Seite angeordnet werden, welche von der ersten Seite abgewandt ist, und dass der erste Dichtring und der zweite Dichtring aus einem Kunststoffmaterial durch Spritzgießen auf dem Grundkörper ausgebildet und daran fest angebracht werden. Mit dem Verfahren kann das zuvor beschriebene erfindungsgemäße Dichtelement hergestellt werden.

Hierfür kann der Grundkörper mit seiner Mittenöffnung, beispielsweise durch ein Stanzverfahren, aus einem Blechrohling ausgestanzt werden. Anschließend kann der Grundkörper, vorzugsweise durch einen Umformungsprozess wie das Tiefziehen mittels einer Tiefziehpresse, in die vorgesehene Form gebracht werden. An den geformten Grundkörper können anschließend die Dichtringe, vorzugsweise mittels eines Spritzgussschrittes in einer entsprechenden Hohlform angegossen werden, welche insbesondere mindestens einen Gusssteg aufweist. Durch ein derartiges Verfahren können Dichtelemente effizient in hohen Stückzahlen gefertigt werden.

Gemäß einer bevorzugten Ausführungsvariante ist das Verfahren dadurch gekennzeichnet, dass an dem Grundkörper in Bereichen, in welchen die Dichtringe angeordnet werden, eine oder mehrere Öffnungen eingebracht werden, welche beim Spritzgießen mit Kunststoffmaterial für ein formschlüssiges Verbinden zumindest teilweise ausgefüllt werden. Das Einbringen der Öffnungen in den Grundkörper kann vorzugsweise ebenfalls in einem Stanzverfahren erfolgen.

Eine weitere vorteilhafte Ausgestaltung des Verfahrens liegt darin, dass zum Bilden einer erfindungsgemäßen Bolzenanordnung ein Bolzen, insbesondere ein Schraubbolzen mit einem Schraubgewinde an einem oder beiden Endbereichen, in die Mittenöffnung eingesteckt und darin festgelegt wird. Durch das Einstecken und Festlegen des Bolzens, welcher vorzugsweise ein Schraubbolzen mit einem oder mehreren Gewindeabschnitten an seiner Außenseite, insbesondere an seinen Endbereichen sein kann, wird eine Anordnung gebildet, welche beispielsweise durch Endeffektoren besser aufgenommen werden kann. Dies erleichtert den Einsatz in beispielsweise teil- oder vollautomatisierten Montageprozessen.

Die Erfindung wird nachfolgend anhand von bevorzugten Ausführungsbeispielen weiter beschrieben, welche schematisch in den Zeichnungen dargestellt sind. In den Zeichnungen zeigen:
- Fig. 1:: eine Draufsicht auf eine erfindungsgemäße Bolzenanordnung mit einem erfindungsgemäßen Dichtelement;
- Fig.2:: eine Querschnittsansicht der Bolzenanordnung von Fig. 1 gemäß dem Schnitt A-A;
- Fig.3:: eine Querschnittsansicht der Bolzenanordnung von Fig. 1 gemäß dem Schnitt B - B;
- Fig. 4:: eine perspektivische Ansicht der erfindungsgemäßen Bolzenanordnung mit dem erfindungsgemäßen Dichtelement gemäß den Figuren 1 bis 3; und
- Fig. 5:: eine andersseitige Draufsicht auf ein erfindungsgemäßes Dichtelement, wobei dieses nur halbseitig und ohne mittig eingeführten Bolzen dargestellt ist.

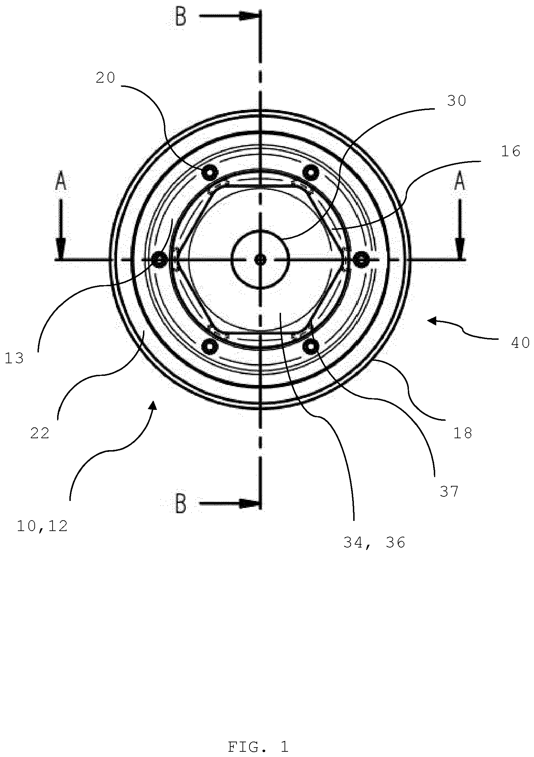

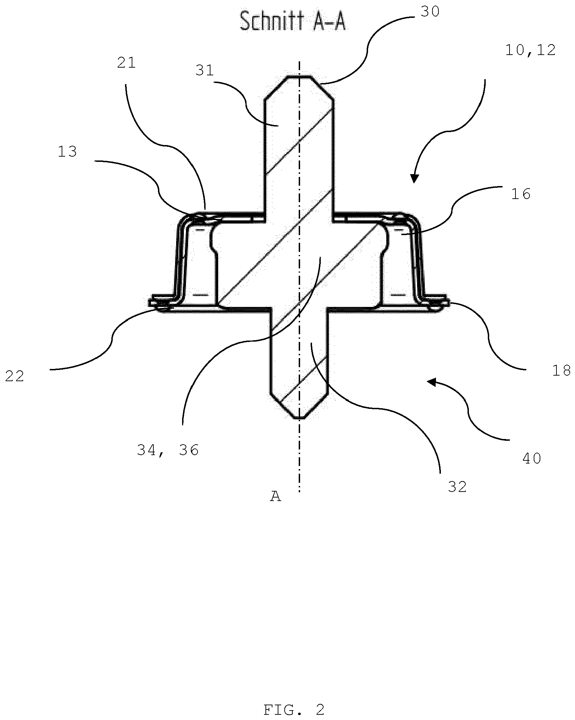

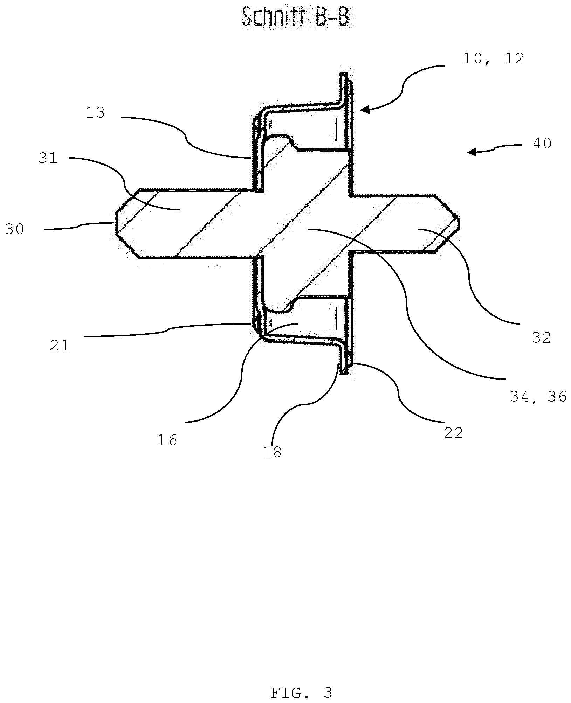

Gemäß den Figuren 1 bis 4 weist eine bevorzugte Ausführungsform eines erfindungsgemäßen Dichtelements 10 einen ringförmigen oder topfförmigen Grundkörper 12 mit einer im Grundkörper 12 angeordneten Mittenöffnung 14 auf , welche zum Aufnehmen und Halten eines Bolzens 30, insbesondere eines Schraubbolzens, ausgebildet ist. Weiterhin sind mindestens zwei Dichtringe 21, 22 an dem Grundkörper 12 angeordnet.

Der Grundkörper 12 kann durch Stanzen und Umformen, vorzugsweise Tiefziehen, aus einem Ausgangsblech mit einer Dicke von 0,1 mm bis 3 mm gefertigt werden. Durch ein solches Verfahren kann die in den Figuren 1 bis 4 dargestellte bevorzugte Ausführungsform des ringförmigen Grundkörpers 12 erreicht werden. Vorzugsweise weist der ringförmige Grundkörper 12 eine Topfform auf, wobei der topfförmige Grundkörper 12 mit einem Bodenbereich 13 an einer unteren ersten Seite und einem radial zu einer Mittenachse A umlaufenden ringförmigen Randsaum 18 an einer oberen zweiten Seite ausgebildet sein kann. Ein erster Dichtring 21 ist an dem Bodenbereich 13 und ein zweiter Dichtring 22 an dem Randsaum 18 angeordnet, wobei die Dichtringe 21, 22 nach jeweils nach außen gerichtet sind. Der Randsaum 18 und der ringscheibenförmige Bodenbereich 13 sind vorzugsweise durch eine trommelförmige Umfangswand 16 mit einer Länge, welche etwa zwischen 5 mm bis 100 mm betragen kann, beabstandet. Hierdurch wird in dem topfförmigen Grundkörper 12 ein innerer Aufnahmeraum geschaffen.

Gemäß der bevorzugten Ausführungsvariante, dargestellt in den Figuren 1 bis 4, muss diese nicht parallel zur Mittenachse A verlaufen, sondern kann eine gewisse Neigung aufweisen. Es kann so ein sich vom Bodenbereich 13 zu dem Randsaum 18 hin erweiternder Konus gebildet sein. Der Randsaum 18 kann eine Breite zwischen 1 mm und 50 mm aufweisen.

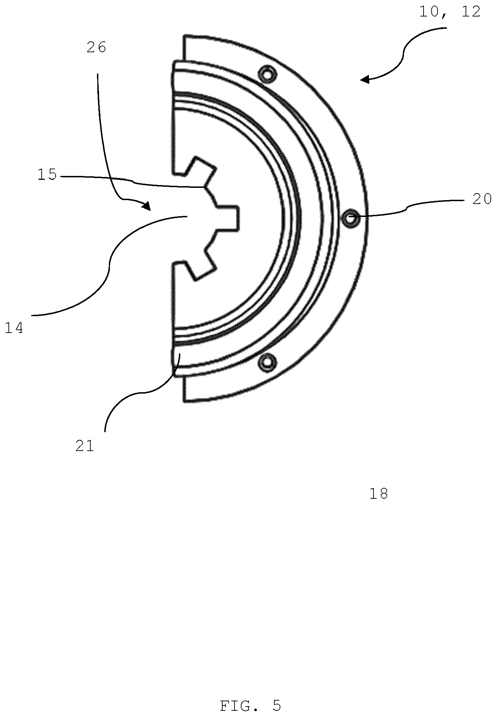

Gemäß einer bevorzugten Ausführungsform sind in Bereichen, in welchen die Dichtringe 21, 22 angeordnet sind, eine oder mehrere Öffnungen 20 eingebracht, welche beim Spritzgießen mit Kunststoffmaterial für ein formschlüssiges Verbinden zumindest teilweise ausgefüllt sind. Nach den in den Figuren 1 und 5 dargestellten Ausführungsvarianten können diese in gleichmäßigen Winkelabständen mit selbem Abstandsradius um die Mittenachse A angeordnet sein. Die Öffnungen 20 können unterschiedliche oder vorzugsweise die gleichen Abmessungen und Lochkonturen aufweisen. Nach einer bevorzugten Ausführungsvariante sind die Dichtringe 21, 22 beispielsweise aus einem thermoplastischen Kunststoffmaterial gefertigt. Diese können vorzugsweise eine konstante Dicke, Höhe und/oder eine halbkreisförmige Querschnittskontur aufweisen.

Eine alternative bevorzugte Ausführungsform sieht vor, dass die Bereiche des Grundkörpers 12 in denen die Dichtringe 21, 22 angeordnet sind, um die Höhe der daran angeordneten Dichtringe 21, 22 derart abgesenkt sind, dass sie beinahe, jedoch nicht genau, dieselbe Gesamthöhe wie die Bereiche des Grundkörpers 12 aufweisen, in denen keine Dichtringe 21, 22 angeordnet sind.

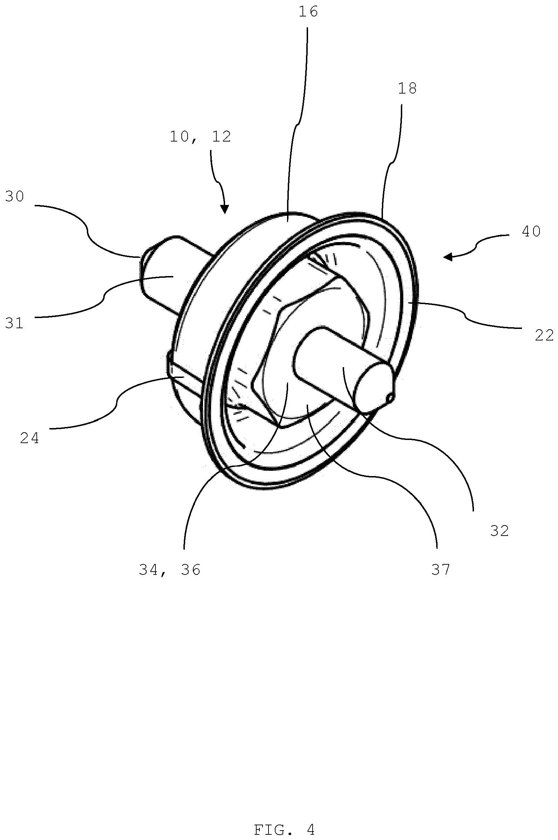

Nach einer bevorzugten Ausführungsform, welche in Figur 4 dargestellt ist, sind die Dichtringe 21, 22 über mindestens einen Gusssteg 24 verbunden, welcher mit dem Kunststoffmaterial der Dichtringe 21, 22 gebildet ist. Der Gusssteg 24 kann vorzugsweise entlang der Außenseite der Umfangswand 16 von dem ersten Dichtring 21 zu dem zweiten Dichtring 22 verlaufen, wobei der Gusssteg 24 beispielsweise durch zumindest eine nicht dargestellte Öffnung verlaufen kann, um von einer Seite der Umfangswand 16 zu der zweiten Seite des Grundkörpers 12, also einer Seite des Randsaumes 18, zu gelangen. Gemäß einer weiteren nicht dargestellten Ausführungsform kann sich der Gusssteg 24 auch über die Außenkante des Randsaumes 18 erstrecken, um die Dichtringe 21, 22 zu verbinden.

An der Mittenöffnung 14 im Bodenbereich 13 kann vorzugsweise, nach den in den Figuren 1 bis 5 dargestellten Ausführungsformen, eine Befestigungseinrichtung 26 zum kraftschlüssigen und/oder formschlüssigen Verbinden mit einem darin aufgenommenen Bolzen 30, welcher vorzugsweise ein Schraubbolzen sein kann, ausgebildet sein. Die Mittenöffnung 14 ist vorzugsweise im Zentrum des Bodenbereichs 13 und mittig zur Mittenachse A angeordnet. Die Befestigungseinrichtung 26 kann durch eine oder mehrere radial nach innen vorspringende Blechnasen 15 entlang des Randes der Mittenöffnung 14 aus dem Grundkörper 12 gebildet sein, wie in Figur 5 dargestellt. Die Blechnasen 15 sind vorzugsweise biegsam und/oder elastisch und können sich bis zu einem Innendurchmesser erstrecken, welcher kleiner als die an einen Anschlagabschnitt 36 angrenzenden Abschnitte des Bolzens 30 ist. Gemäß einer weiteren bevorzugten Ausführungsform kann das Material der Blechnasen 15 eine Dicke unterschiedlich, insbesondere kleiner, zu der des Grundkörpers 12 aufweisen, um eine gewünschte Biegsamkeit zu gewährleisten.

Eine beispielhafte Bolzenanordnung 40 aus einem mittigen Bolzen 30 und einem daran angebrachten Dichtelement 10 ist in den Figuren 1 bis 4 dargestellt. Wobei der Bolzen 30 vorzugsweise als ein Schraubbolzen ausgebildet ist, welcher an einem oder beiden Endbereichen 31, 32 mit einem nicht näher dargestellten Schraubgewinde versehen ist. Gemäß einer bevorzugten Ausführungsvariante kann das Schraubgewinde ein metrisches ISO-Gewinde, wie ein Feingewinde oder Kegelgewinde sein. Weiter kann in einem Mittenbereich 34 des Bolzens 30 ein Anschlagabschnitt 36 ausgebildet sein, welcher einen maximalen Außendurchmesser aufweist, welcher größer als ein Durchmesser der angrenzenden Abschnitte des Bolzens 30 ist, insbesondere größer als ein Durchmesser des mindestens einen Schraubgewindes. Dabei kann die Gesamthöhe des Anschlagabschnitts 36 in axialer Richtung gemäß einer bevorzugten Ausführungsform kleiner als die Gesamthöhe in axialer Richtung des Grundkörpers 12 sein, sodass zumindest der Anschlagabschnitt 36 von dem Dichtelement 10 abdichtend umfasst ist.

Bevorzugt ist der Anschlagabschnitt 36 mit einer polygonalen Außenkontur 37 versehen, welche zum Aufbringen eines Schraub-Drehmoments mittels eines passenden Schraubwerkzeuges ausgebildet ist. Vorzugsweise kann die polygonale Außenkontur 37 etwa als ein Sechskant ausgebildet sein, um so für übliche Steckschlüssel oder Stecknüsse geeignet zu sein. Des Weiteren ist die Bolzenanordnung 40 so ausgebildet, dass die Blechnasen 15 unter einem elastischen Aufbiegen auf den Bolzen 30 bis zu dem Anschlagabschnitt 36 aufgeschoben sind und das Dichtelement 10 an dem Bolzen 30 festlegen. Hierbei ist es nach einer vorteilhaften Ausführungsform vorgesehen, dass sich die Endbereiche 31, 32 der Blechnasen 15 mit den Gewindeflanken des Schraubgewindes verzahnen können, um so eine besonders robuste und zuverlässige Fixierung des Bolzens 30 zu bewirken.

## Patentansprüche

1. Dichtelement mit
- einem ringförmigen Grundkörper (12) aus einem Blechmaterial,
- einer im Grundkörper (12) angeordneten Mittenöffnung (14), welche zum Aufnehmen und Halten eines Bolzens (30), insbesondere eines Schraubbolzens, ausgebildet ist, und
- mindestens einem Dichtring, welcher an dem Grundkörper (12) angeordnet ist,
**dadurch gekennzeichnet,**
- **dass** ein erster Dichtring (21) an einer ersten Seite des Grundkörpers (12) angeordnet ist,
- **dass** ein zweiter Dichtring (22) an dem Grundkörper (12) an einer zweiten Seite angeordnet ist, welche von der ersten Seite abgewandt ist, und
- **dass** der erste Dichtring (21) und der zweite Dichtring (22) aus einem Kunststoffmaterial durch Spritzgießen auf dem Grundkörper (12) ausgebildet und daran fest angebracht sind.

2. Dichtelement nach Anspruch 1,
**dadurch gekennzeichnet,**
**dass** an der Mittenöffnung (14) eine Befestigungseinrichtung (26) zum kraftschlüssigen und/oder formschlüssigen Verbinden mit einem darin aufgenommenen Bolzen (30) ausgebildet ist.

3. Dichtelement nach Anspruch 2,
**dadurch gekennzeichnet,**
**dass** die Befestigungseinrichtung (26) durch eine oder mehrere radial nach innen vorspringende Blechnasen (15) an dem Grundkörper (12) gebildet ist.

4. Dichtelement nach einem der Ansprüche 1 bis 3,
**dadurch gekennzeichnet,**
**dass** der Grundkörper (12) topfförmig mit einem Bodenbereich (13) an der ersten Seite und einem radial gerichteten Randsaum (18) an der zweiten Seite ausgebildet ist und
**dass** der erste Dichtring (21) an dem Bodenbereich (13) und der zweite Dichtring (22) an dem Randsaum (18) angeordnet sind.

5. Dichtelement nach einem der Ansprüche 1 bis 4,
**dadurch gekennzeichnet,**
**dass** an dem Grundkörper (12) in Bereichen, in welchen die Dichtringe (21, 22) angeordnet sind, eine oder mehrere Öffnungen (20) eingebracht sind, welche beim Spritzgießen mit Kunststoffmaterial für ein formschlüssiges Verbinden zumindest teilweise ausgefüllt sind.

6. Dichtelement nach einem der Ansprüche 1 bis 5,
**dadurch gekennzeichnet,**
**dass** die Dichtringe (21, 22) über mindestens einen Gusssteg (24) verbunden sind, welcher mit dem Kunststoffmaterial der Dichtringe (21, 22) gebildet ist.

7. Dichtelement nach einem der Ansprüche 1 bis 6,
**dadurch gekennzeichnet,**
**dass** der Grundkörper (12) durch Stanzen und Umformen, insbesondere Tiefziehen, gebildet ist.

8. Bolzenanordnung mit
- einem mittigen Bolzen (30) und
- einem daran angebrachten Dichtelement (10),
**dadurch gekennzeichnet,**
**dass** das Dichtelement (10) nach einem der Ansprüche 1 bis 7 ausgebildet ist.

9. Bolzenanordnung nach Anspruch 8,
**dadurch gekennzeichnet,**
**dass** der Bolzen (30) als ein Schraubbolzen ausgebildet ist, welcher an einem oder beiden Endbereichen (31, 32) mit einem Schraubgewinde versehen ist.

10. Bolzenanordnung nach Anspruch 8 oder 9,
**dadurch gekennzeichnet,**
**dass** in einem Mittenbereich (34) des Bolzens (30) ein Anschlagabschnitt (36) ausgebildet ist, welcher einen maximalen Außendurchmesser aufweist, welcher größer als ein Durchmesser der angrenzenden Abschnitte des Bolzens (30) ist, insbesondere größer als ein Durchmesser des mindestens einen Schraubgewindes.

11. Bolzenanordnung nach Anspruch 10,
**dadurch gekennzeichnet,**
**dass** der Anschlagabschnitt (36) mit einer polygonalen Außenkontur (37) versehen ist, welche zum Aufbringen eines Drehmomentes mittels eines passenden Schraubwerkzeuges ausgebildet ist.

12. Bolzenanordnung nach einem der Ansprüche 8 bis 11,
**dadurch gekennzeichnet,**
**dass** an dem Grundkörper (12) des Dichtelementes (10) zum Bilden einer Befestigungseinrichtung (26) radial nach innen vorspringende Blechnasen (15) ausgebildet sind, welche biegsam sind und sich bis zu einem Innendurchmesser erstrecken, welcher kleiner als die an den Anschlagabschnitt (36) angrenzenden Abschnitte des Bolzens (30) sind, und
**dass** die Blechnasen (15) unter einem elastischen Aufbiegen auf den Bolzen (30) bis zu dem Anschlagabschnitt (36) aufgeschoben sind und das Dichtelement (10) an dem Bolzen (30) festlegen.

13. Verfahren zum Bilden eines Dichtelement (10) nach einem der Ansprüche 1 bis 7, wobei
- aus einem Blechmaterial ein ringförmiger Grundkörper (12) mit einer Mittenöffnung (14) gebildet wird, welche zum Aufnehmen und Halten eines Bolzens (30), insbesondere eines Schraubbolzens, ausgebildet ist, und
- mindestens ein Dichtring an dem Grundkörper (12) angeordnet wird,
wobei
- ein erster Dichtring (21) an einer ersten Seite des Grundkörpers (12) und ein zweiter Dichtring an dem Grundkörper (12) an einer zweiten Seite angeordnet werden, welche von der ersten Seite abgewandt ist, und
- dass der erste Dichtring (21) und der zweite Dichtring (22) aus einem Kunststoffmaterial durch Spritzgießen auf dem Grundkörper (12) ausgebildet und daran fest angebracht werden.

14. Verfahren nach Anspruch 13,
**dadurch gekennzeichnet,**
**dass** an dem Grundkörper (12) in Bereichen, in welchen die Dichtringe (21, 22) angeordnet werden, eine oder mehrere Öffnungen (20) eingebracht werden, welche beim Spritzgießen mit Kunststoffmaterial für ein formschlüssiges Verbinden zumindest teilweise ausgefüllt werden.

15. Verfahren nach Anspruch 13 oder 14,
**dadurch gekennzeichnet,**
**dass** zum Bilden einer Bolzenanordnung (40), insbesondere nach einem der Ansprüche 8 bis 12, ein Bolzen (30), insbesondere ein Schraubbolzen mit einem Schraubgewinde an einem oder beiden Endbereichen (31, 32), in die Mittenöffnung (14) eingesteckt und darin festgelegt wird.
